# EUROPÄISCHE PATENTSCHRIFT

(11) **EP 2 904 271 B1**
(45) Veröffentlichungstag und Bekanntmachung des Hinweises auf die Patenterteilung: **01.02.2017**
(21) Anmeldenummer: 13759173.1
(22) Anmeldetag: 04.09.2013
(51) Int. Cl.: F04D 19/00, F04D 29/52, F04D 29/58

(54) **WANDRING MIT WANDRINGHEIZUNG FÜR AXIALLÜFTER**
WALL RING WITH WALL RING HEATING ELEMENT FOR AXIAL FANS
ANNEAU MURAL, À CHAUFFAGE DE L'ANNEAU MURAL, POUR VENTILATEUR AXIAL

(30) Priorität: 08.10.2012 DE 102012109544
(43) Veröffentlichungstag der Anmeldung: 12.08.2015
(73) Patentinhaber: EBM-Papst Mulfingen GmbH&CO. KG, 74673 Mulfingen (DE)
(72) Erfinder: BEST, Dieter, 74653 Ingelfingen (DE); STRÖBEL, Othmar, 74575 Schrozberg (DE); WOLFARTH, Stefanie, 97996 Niederstetten (DE)
(74) Vertreter: Jostarndt Patentanwalts-AG
(86) Internationale Anmeldenummer: PCT/EP2013/068271
(87) Internationale Veröffentlichungsnummer: WO 2014/056662

(56) Entgegenhaltungen:
- EP-A2- 1 363 383
- US-A1- 2002 048 513

## Beschreibung

Die vorliegende Erfindung betrifft einen Wandring für die Aufnahme eines Axiallüfters umfassend einen ringförmigen Körper mit einer mittleren Längsachse, mit einer Strömungseintrittsöffnung und einer Strömungsaustrittsöffnung und mit insbesondere einem elektrischen Heizelement, das am ringförmigen Körper mindestens teilumfänglich angeordnet ist. Ein solcher Axiallüfter ist aus dem EP 1 363 383 A2 bekannt.

Axiallüfter werden unter anderem für Anwendungen bei sehr tiefen Temperaturen eingesetzt. Hierbei besteht die Gefahr von Eisbildung und somit eines Festfrierens der Lüfterradflügel am Wandring. Typische Anwendungen, bei denen diese Gefahr besteht, sind Wärmepumpen, Verdampfer in Kühlräumen und dergleichen. Um ein derartiges Festfrieren zu verhindern, wird bekannterweise ein Heizelement als elektrische Widerstandsheizung auf dem Wandring aufgebracht und als Heizung verwendet. Nachteilig ist hierbei die große Energiemenge, die eingebracht werden muss, um den Wandring durchzuwärmen, eine Eisbildung auf der Wandringinnenseite zu verhindern, bzw. auftretendes Eis abzuschmelzen. Hierbei erfolgt eine hohe Wärmeabgabe an die Umgebung, und die auf diese Weise in den Kühlraum eingebrachte Wärme muss nachträglich aus dem Kühlraum wieder entzogen werden. Hieraus ergibt sich, dass eine derartige Wandringheizung energieineffizient ist.

Der vorliegenden Erfindung liegt die Aufgabe zu Grunde, die vorstehenden Nachteile zu vermeiden und die Bildung von Eis auf der Wandringinnenseite zu reduzieren. Erfindungsgemäß wird dies dadurch erreicht, dass an der Außenseite des ringförmigen Körpers ein Abdeckprofil aus thermisch isolierendem Material, zumindest teilumfänglich lösbar am ringförmigen Körper befestigt ist, das mit diesem einen Aufnahmeraum für die Aufnahme des elektrischen Heizelementes einschließt. Durch die Montage des elektrischen Heizelementes, das vorzugsweise als Heizband ausgebildet ist, in einer Luftkammer zwischen dem Wandring und dem äußeren thermisch isolierenden Abdeckprofil, wird eine große Verteilung der Wärme auf den Wandring bewirkt. Hierbei wird durch das äußere isolierende Abdeckprofil erreicht, dass geringe Wärmeverluste auftreten. Erfindungsgemäß besteht das Abdeckprofil aus geschäumtem Kunststoff. Erfindungsgemäß wird somit die Wärme dort erzeugt, wo sie auch benötigt wird und verhindert die Eisbildung zwischen den Axialflügeln des Axiallüfters und dem Wandring. Auf Grund der lösbaren Befestigung der Abdeckprofile kann das Heizband auch nachträglich eingelegt werden. Hierbei wird durch das äußere Abdeckprofil verhindert, dass keine hohe Wärmeabgabe an die Umgebung erfolgt, so dass eine energieeffiziente Wandringheizung erreicht wird, da die in den Kühlraum eingebrachte Wärme durch das äußere thermisch isolierende Abdeckprofil wesentlich verringert wird.

Erfindungsgemäß ist es weiterhin von Vorteil, wenn an der Außenseite des ringförmigen Körpers zwei axial beabstandete, umfangsgemäß verlaufende Halterippen ausgebildet sind, zwischen denen das insbesondere als Heizband ausgebildete elektrische Heizelement angeordnet ist. Hierdurch wird eine exakte Lagefixierung des Heizelementes auf dem ringförmigen Körper gewährleistet.

Erfindungsgemäß ist es weiterhin von Vorteil, wenn das Abdeckprofil aus mindestens zwei, vorzugsweise vier kreisbogenförmigen Abdeckabschnitten besteht, die zu einem kreisringförmigen Abdeckprofil lösbar miteinander und mit dem ringförmigen Körper verbunden sind. Diese erfindungsgemäße Segmentierung ermöglicht eine leichtere Montage des erfindungsgemäßen Abdeckprofils.

Weitere vorteilhafte Ausführungen der Erfindung sind in den Unteransprüchen enthalten und werden an Hand des in den beiliegenden Zeichnungen dargestellten Ausführungsbeispiels näher erläutert. Es zeigen:
- Fig. 1: einen Schnitt durch einen erfindungsgemäßen Wandring mit eingebautem Axiallüfter,
- Fig. 2: eine perspektivische Seitenansicht eines erfindungsgemäßen Wandrings ohne Abdeckprofil,
- Fig. 3a, 3b: verschiedene perspektivische Ansichten eines erfindungsgemäßen Abdeck-Abschnitts,
- Fig. 3c: eine perspektivische Teilansicht zweier verbundener Abdeck-Abschnitte gemäß Fig. 3a, 3b,
- Fig. 4: eine perspektivische Seitenansicht eines erfindungsgemäßen Wandrings mit montiertem Abdeckprofil,
- Fig. 5: eine Seitenansicht des Wandrings gemäß Fig. 4, teilweise geschnitten und
- Fig. 6: eine Einzelheit bei VI in Fig. 5.

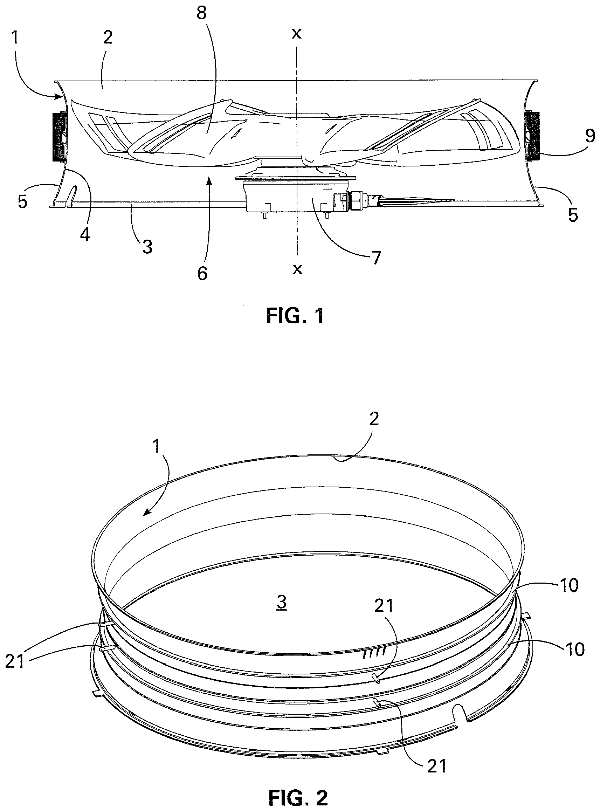

In den Fig. 1 bis 6 sind gleiche Teile bzw. funktionsgleiche Teile stets mit denselben Bezugszeichen gekennzeichnet.

Ein erfindungsgemäßer Wandring besteht, wie in den Figuren dargestellt, aus einem ringförmigen Körper 1 mit einer mittleren Längsachse X-X, mit einer Strömungseintrittsöffnung 2 und einer Strömungsaustrittsöffnung 3. Der erfindungsgemäße Ringkörper 1 weist zwischen den beiden Öffnungen 2, 3 eine Ringwand 4 auf, die einen senkrecht zur Mittelachse X-X bezogenen kreisförmigen Querschnitt besitzt. Im dargestellten Ausführungsbeispiel befindet sich innerhalb des erfindungsgemäßen Wandrings ein Axiallüfter 6. Dieser besteht aus einem zentrisch in der Mittellängsachse X-X angeordneten Elektromotor 7, an dem ein Flügelrad 8 abgeschossen ist. Der erfindungsgemäße ringförmige Körper 1 besteht insbesondere aus Kunststoff. Der ringförmige Körper 1 besitzt in einer zur Längsachse X-X senkrechten Ebene insbesondere einen kreisförmigen Querschnitt. Die Ringwand 4 hat eine konvex gebogene Kontur, so dass der Durchmesser der Öffnungen 2, 3 größer ist als der Durchmesser des ringförmigen Körpers 1 in der Mitte zwischen diesen.

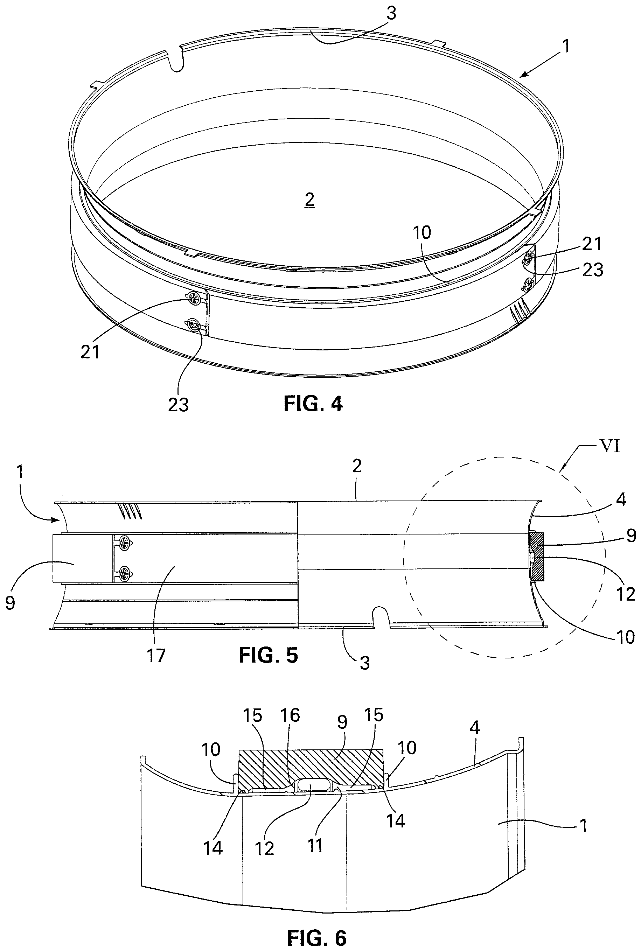

Der ringförmige Körper 1 weist an seiner Ringwand-Außenseite 5 ein Abdeckprofil 9 auf, das aus thermisch isolierendem Kunststoffmaterial besteht und an dem ringförmigen Körper 1 lösbar befestigt ist. Dieses Abdeckprofil 9 umfasst den ringförmigen Körper 1 umfangsgemäß. Es liegt jedoch auch im Rahmen der Erfindung, wenn das Abdeckprofil 9 nur an einem Teilumfang des ringförmigen Körpers 1 angeordnet ist. Das Abdeckprofil 9 schließt mit dem ringförmigen Körper 1 einen Aufnahmeraum 11 auf, in dem ein elektrisches Heizelement 12 angeordnet ist. Im dargestellten Ausführungsbeispiel ist das elektrische Heizelement 12 bandförmig ausgebildet und der Aufnahmeraum 11 bildet eine Luftkammer zwischen dem ringförmigen Körper 1 und dem Abdeckprofil 9, wodurch eine gleichmäßige Verteilung der durch das Heizelement 12 erzeugten Wärme auf den Wandring erreicht wird. Als Kunststoffmaterial für das Abdeckprofil 9 wird gemäß der Erfindung ein geschäumter Kunststoff verwendet. Die Dicke des Abdeckprofils 9 wird derart bemessen, dass eine maximale Abschirmung der von dem Heizelement 12 erzeugten Wärme erreicht wird, so dass wenig Wärme nach außen abgestrahlt wird und der volle Wärmeeintrag in den Wandring selbst erfolgt. Wie insbesondere aus Fig. 6 zu entnehmen ist, wird das elektrische Heizelement 12, bei dem es sich um ein elektrisches Widerstandselement handeln kann, von dem Abdeckprofil 9 und dem ringförmigen Körper 1 fixiert, und der Aufnahmeraum 11 ist derart ausgestaltet, dass beidseitig von dem elektrischen Heizelement 12 zu den beiden umfangsgemäßen Seitenrändern des Abdeckprofils 9 ein Luftspalt 15 ausgebildet ist, der jeweils endseitig durch ringförmige Ansätze 14 am Abdeckprofil 9 verschlossen wird. Mit diesen ringförmigen Ansätzen 14 liegt das Abdeckprofil 9 an der Ringwand 4 an deren Außenseite an. Durch die beidseitig des elektrischen Heizelementes 12 ausgebildeten Luftspalte 15 erfolgt eine Wärmeübertragung auf die Ringwand 4 in einem sehr großen Bereich. Weiterhin ist aus Fig. 1 und Fig. 6 insbesondere zu erkennen, dass an der Außenseite, d. h. der dem Abdeckprofil 9 zugekehrten Seite der Ringwand 4 bzw. des ringförmigen Körpers 1 zwei in axialer Richtung beabstandete, umfangsgemäß senkrecht zur Außenseite verlaufende Halterippen 10 ausgebildet sind, zwischen denen das Abdeckprofil 9 fixiert wird.

Zur Aufnahme des elektrischen Heizelementes 12 weist das Abdeckprofil 9 an seiner der Ringwand 4 zugekehrten Innenseite mittig eine umlaufende Ausnehmung 16 auf. Die Tiefe der Ausnehmung 16 ist an die Abmessungen des elektrischen Heizelementes 12 angepasst und ist derart bemessen, dass bei Auflage des Abdeckprofils 9 mittels seiner ringförmigen Ansätze 14 das elektrische Heizelement 12 zwischen dem Abdeckprofil 9 und der Ringwand 4 unter jeweiliger Anlage gehalten wird.

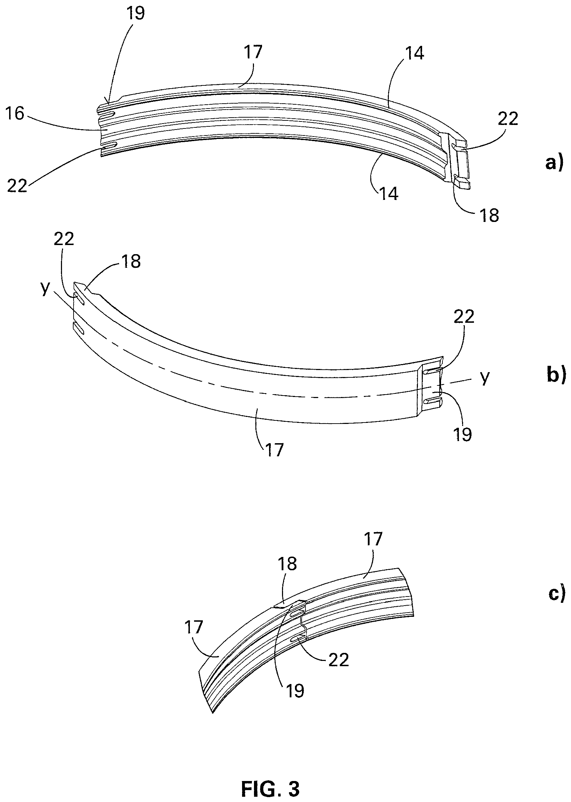

Das erfindungsgemäße Abdeckprofil 9 besteht zweckmäßigerweise aus mindestens zwei, vorzugsweise vier kreisbogenförmigen Abdeck-Abschnitten 17, die zu dem erfindungsgemäßen kreisringförmigen Abdeckprofil 9 miteinander lösbar verbunden werden und an dem ringförmigen Körper 1 ebenfalls lösbar befestigt sind. Die Abdeck-Abschnitte 17 besitzen an ihren Enden jeweils insbesondere ein Stufenprofil 18, 19, wobei das Stufenprofil 18 an einem Ende die Negativvorm des Stufenprofils 19 am anderen Ende aufweist, so dass im montierten Zustand eine Überlappung der miteinander verbundenen Abdeck-Abschnitte 17 im Bereich ihrer Stufenprofile 18, 19 vorhanden ist, siehe Fig. 3 c. Die Höhe des Stufenprofils 18, 19 beträgt die halbe Höhe des Abdeck-Abschnitts 17, so dass im montierten Zustand die Abdeck-Abschnitte 17 in ihrem Verbindungsbereich bündig miteinander abschließen. An ihrer Außenseite sind die Abdeck-Abschnitte 17 bzw. das Abdeckprofil 9 zweckmäßigerweise glattwandig ausgebildet. Der ringförmige Körper 1 besitzt zweckmäßigerweise im Bereich zwischen den Halterippen 10 an seiner Außenseite senkrecht zu dieser abstehende Fixierstifte 21, auf die die kreisbogenförmigen Abdeck-Abschnitte 17 mittels Montageöffnungen 22 aufschiebbar sind. Diese Montageöffnungen 22 sind vorzugsweise als in Längsrichtung Y-Y der Abdeck-Abschnitte 17 im Bereich der Stufenprofile 18, 19 verlaufende, einseitig randoffene Schlitze ausgebildet. Die schlitzförmigen Montageöffnungen 22 sind dazu geeignet, einerseits Herstellungstoleranzen auszugleichen und andererseits thermische Ausdehnungen auf Grund unterschiedlicher Materialeigenschaften zwischen dem ringförmigen Körper 1 und dem Abdeckprofil 9 zu kompensieren. Zum Fixieren des Abdeckprofils 9 bzw. der Abdeck-Abschnitte 17 auf den Fixierstiften 21 dienen auf die Fixierstifte 21 endseitig aufgesteckte Klemmscheiben 23, die eine mittige, sternförmige Öffnung aufweisen, die von mehreren radial nach innen ragenden, federelastischen Laschen begrenzt ist, deren freie Enden auf einem Innenkreis der Scheibe liegen, wobei der Durchmesser des Innenkreises der Scheibe kleiner ist als ein Außendurchmesser der Fixierstifte 21. Hierdurch sitzen die Klemmscheiben 23 kraftschlüssig auf den Fixierstiften 21. Die Klemmscheiben 23 bestehen vorteilhafterweise aus federelastischem Material, insbesondere nichtrostendem Metall, z. B. gehärtetem Federstahl.

Der erfindungsgemäße Wandring mit dem äußeren Abdeckelement, wobei zwischen diesen beiden Teilen ein elektrisches Heizelement 12 in einem Aufnahmeraum 11 eingeschlossen ist, reduziert bei Lüftern, die in Kühlgeräten und Verdampfern eingebaut werden, die Vereisungsneigung, reduziert wesentlich den Wärmeeintrag in dem Wärmetauscher, und es kann eine Vereisung verhindert werden. Hierbei ist eine einfache Montage und Demontage möglich. Es kann auch ein erfindungsgemäßer Wandring, bestehend aus dem ringförmigen Körper 1 und dem Abdeckprofil 9 ohne eingeschlossenes elektrisches Heizelement 12 zum Einsatz kommen, wobei schon durch die vorhandene Luftkammer zwischen diesen beiden Teilen eine isolierende Wirkung erzielt wird.

Die Erfindung ist nicht auf die dargestellten und beschriebenen Ausführungsbeispiele beschränkt, sondern umfasst auch alle im Sinne der Erfindung gleichwirkenden Ausführungen, die zum Gegenstand der Ansprüche gehören.

### Bezugszeichenliste

- 1: Ringförmiger Körper
- 2: Strömungseintrittsöffnung
- 3: Strömungsaustrittsöffnung
- 4: Ringwand
- 5: Ringwand-Außenseite
- 6: Axiallüfter
- 7: Elektromotor
- 8: Flügelrad
- 9: Abdeckprofil
- 10: Halterippen
- 11: Aufnahmeraum
- 12: elektrisches Heizelement
- 14: ringförmige Ansätze
- 15: Luftspalt
- 16: umlaufende Ausnehmung
- 17: Abdeck-Abschnitte
- 18: Stufenprofil
- 19: Stufenprofil
- 21: Fixierstifte
- 22: Montageöffnungen
- 23: Klemmscheiben
- X-X: Mittellängsachse
- Y-Y: Längsrichtung

## Patentansprüche

1. Wandring für die Aufnahme eines Axiallüfters (6), umfassend einen ringförmigen Körper (1) mit einer mittleren Längsachse (X-X) und mit einer Strömungseintrittsöffnung (2) und einer Strömungsaustrittsöffnung (3) und insbesondere mit einem elektrischen Heizelement (12), das am ringförmigen Körper (1) mindestens teilumfänglich angeordnet ist,
wobei an einer Außenseite des ringförmigen Körpers (1) ein Abdeckprofil (9) aus thermisch isolierendem Material zumindest teilumfänglich lösbar befestigt ist, das mit dem ringförmigen Körper (1) im Bereich seiner Ringwand (4) einen Aufnahmeraum (11) zur Aufnahme des elektrischen Heizelementes (12) einschließt,
**dadurch gekennzeichnet, dass** das Abdeckprofil (9) aus einem geschäumten Kunststoffmaterial besteht.

2. Wandring nach Anspruch 1,
**dadurch gekennzeichnet, dass** an der Außenseite des ringförmigen Körpers (1) zwei in Richtung der Längsachse (X-X) beabstandete, umfangsgemäß verlaufende Halterippen (10) ausgebildet sind, zwischen denen das Abdeckprofil (9) seitlich fixiert wird.

3. Wandring nach Anspruch 1 oder 2,
**dadurch gekennzeichnet, dass** der ringförmige Körper (1) aus Kunststoff besteht.

4. Wandring nach einem der Ansprüche 1 bis 3,
**dadurch gekennzeichnet, dass** der ringförmige Körper (1) in einer senkrecht zur Längsachse (X-X) verlaufenden Ebene einen kreisförmigen Querschnitt besitzt und seine Ringwand insbesondere konvex gekrümmt ist.

5. Wandring nach einem der Ansprüche 1 bis 4,
**dadurch gekennzeichnet, dass** das ein Abdeckprofil (9) aus mindestens zwei, vorzugsweise vier kreisbogenförmigen Abdeck-Abschnitten (17) besteht, die zu dem kreisringförmigen Abdeckprofil (9) lösbar miteinander und mit dem ringförmigen Körper (1) verbindbar sind.

6. Wandring nach einem der Ansprüche 2 bis 5,
**dadurch gekennzeichnet, dass** der ringförmige Körper (1) im Bereich zwischen den Halterippen (10) an seiner Außenseite senkrecht zu dieser abstehende Fixierstifte (21) aufweist, auf die die kreisbogenförmigen Abdeck-Abschnitte (17) mittels Montageöffnungen (22) aufschiebbar sind.

7. Wandring nach Anspruch 5 oder 6,
**dadurch gekennzeichnet, dass** die Abdeck-Abschnitte (17) an ihren Enden jeweils ein Stufenprofil (18, 19) besitzen, wobei das Stufenprofil (18) an einem Ende die Negativform des Stufenprofils (19) am anderen Ende besitzt, so dass im montierten Zustand eine Überlappung im Bereich der Stufenprofile (18, 19) gegeben ist.

8. Wandring nach Anspruch 6 oder 7,
**dadurch gekennzeichnet, dass** die Montageöffnung (22) als in Längsrichtung (Y-Y) der Abdeck-Abschnitte (17) im Bereich der Stufenprofile (18, 19) verlaufender randoffener Schlitz ausgebildet ist.

9. Wandring nach einem der Ansprüche 6 bis 8,
**dadurch gekennzeichnet, dass** die Abdeck-Abschnitte (17) im auf die Fixierstifte (21) aufgeschobenen Zustand mittels auf die Fixierstifte (21) aufgesteckter Klemmscheiben (23) befestigt sind.

10. Wandring nach Anspruch 9,
**dadurch gekennzeichnet, dass** die Klemmscheiben (23) ringförmig ausgebildet sind, wobei sie eine mittige, sternförmige Öffnung aufweisen, die von mehreren radial nach innen ragenden, federelastischen Laschen begrenzt ist, deren freie Enden auf einem Innenkreis der Scheibe (23) liegen, dessen Durchmesser kleiner ist als ein Außendurchmesser der Fixierstifte (21).

## Claims

1. A wall ring for receiving an axial fan (6), comprising an annular body (1) having a central longitudinal axis (X-X), with a flow inlet opening (2) and a flow outlet opening (3), and in particular, said wall ring comprising an electric heating element (12) that is arranged at least over part of the circumference of the annular body (1), whereby a covering profile (9) made of a thermally insulating material is removably affixed to the outside of the annular body (1), at least over part of the circumference, said covering profile (9) - together with the annular body (1) in the area of its ring wall (4) - enclosing a receiving space (11) for the electric heating element (12),
**characterized in that** the covering profile (9) is made of a foamed plastic material.

2. The wall ring according to claim 1,
**characterized in that**, on the outside of the annular body (1), there are two circumferential holding ribs (10) which are at a space from each other in the direction of the longitudinal axis (X-X), and between which the covering profile (9) is laterally affixed.

3. The wall ring according to claim 1 or 2,
**characterized in that** the annular body (1) is made of plastic.

4. The wall ring according to one of claims 1 to 3,
**characterized in that** the annular body (1) has a circular cross section in a plane that is perpendicular to the longitudinal axis (X-X), and its ring wall especially is convexly curved.

5. The wall ring according to one of claims 1 to 4,
**characterized in that** the covering profile (9) consists of at least two, preferably four, circular arc-shaped covering sections (17) that are removably joined to each other so as to form the circular annular covering profile (9) and that can be joined to the annular body (1).

6. The wall ring according to one of claims 2 to 5,
**characterized in that**, in the area between the holding ribs (10), the outside of the annular body (1) has fixation pins (21) which protrude perpendicular thereto and onto which the circular arc-shaped covering sections (17) can be slid through installation openings (22).

7. The wall ring according to claim 5 or 6,
**characterized in that** the ends of the covering sections (17) each have a stepped profile (18, 19), whereby one end of the stepped profile (18) has the negative shape of the stepped profile (19) at the other end, so that, in the installed state, an overlapping exists in the area of the stepped profiles (18, 19).

8. The wall ring according to claim 6 or 7,
**characterized in that** the installation opening (22) is configured as a slit that has an open edge and that runs in the lengthwise direction (Y-Y) of the covering sections (17) in the area of the stepped profiles (18, 19).

9. The wall ring according to one of claims 6 to 8,
**characterized in that**, when the covering sections (17) are in the state in which they have been slid onto the fixation pins (21), they are attached by means of clamping discs (23) that have been slid onto the fixation pins (21).

10. The wall ring according to claim 9,
**characterized in that** the clamping discs (23) have an annular configuration, whereby they have a centered star-shaped opening which is delimited by several resilient tabs that extend radially inwards and whose free ends are situated on an inner circle of the disc (23), whereby the diameter of the inner circle of the disc is smaller than the outer diameter of the fixation pins (21).

## Revendications

1. Anneau mural destiné à recevoir un ventilateur axial (6), comprenant un corps annulaire (1) avec un axe longitudinal central (X-X) et un orifice d'entrée d'écoulement (2) et un orifice de sortie d'écoulement (3), et plus particulièrement avec un élément de chauffage électrique (12) qui est agencé sur au moins une partie du pourtour du corps annulaire (1),
un profilé de recouvrement (9) en matériau thermo-isolant étant fixé de manière détachable sur au moins une partie du pourtour sur la face extérieure du corps annulaire (1), ledit profilé entourant, avec le corps annulaire (1), dans la zone de sa paroi annulaire (4), un espace de logement (11) destiné à recevoir l'élément de chauffage électrique (12),
**caractérisé en ce que** le profilé de recouvrement (9) est composé d'une matière plastique mousse.

2. Anneau mural selon la revendication 1, **caractérisé en ce que** sont réalisées, sur la face extérieure du corps annulaire (1), deux nervures de maintien (10) qui s'étendent sur le pourtour et sont espacées en direction de l'axe longitudinal (X-X), et entre lesquelles le profilé de recouvrement (9) est fixé latéralement.

3. Anneau mural selon la revendication 1 ou 2, **caractérisé en ce que** le corps annulaire (1) est composé de matière plastique.

4. Anneau mural selon l'une des revendications 1 à 3, **caractérisé en ce que** le corps annulaire (1) présente une section circulaire dans un plan vertical par rapport à l'axe longitudinal (X-X) et **en ce que** sa paroi annulaire présente une courbure en particulier convexe.

5. Anneau mural selon l'une des revendications 1 à 4, **caractérisé en ce que** le profilé de recouvrement (9) est composé d'au moins deux, préférentiellement de quatre parties de recouvrement (17) en forme d'arc de cercle qui peuvent être reliées au corps annulaire (1) et entre elles de manière détachable pour former le profilé de recouvrement circulaire (9).

6. Anneau mural selon l'une des revendications 2 à 5, **caractérisé en ce que** le corps annulaire (1) comporte, dans la partie située entre les nervures de maintien (10), sur sa face extérieure, des tiges de fixation (21) en saillie sur lesquelles les parties de recouvrement circulaires (17) peuvent être enfilées au moyen d'ouvertures de montage (22).

7. Anneau mural selon la revendication 5 ou 6, **caractérisé en ce que** les parties de recouvrement (17) présentent respectivement, en leurs extrémités, un profilé étagé (18, 19), la forme du profilé étagé (18) étant, en une extrémité, le négatif du profilé étagé (19) à l'autre extrémité, de sorte qu'à l'état monté il y a chevauchement dans la zone des profilés étagés (18, 19).

8. Anneau mural selon la revendication 6 ou 7, **caractérisé en ce que** l'ouverture de montage (22) est réalisée sous la forme d'une fente à bord ouvert qui s'étend dans le sens longitudinal (Y-Y) des parties de recouvrement (17) dans la zone des profilés étagés (18, 19).

9. Anneau mural selon l'une des revendications 6 à 8, **caractérisé en ce que** les parties de recouvrement (17) sont fixées, à l'état enfilé sur les tiges de fixation (21), au moyen de rondelles de serrage (23) enfilées sur les tiges de fixation (21).

10. Anneau mural selon la revendication 9, **caractérisé en ce que** les rondelles de serrage (23) sont réalisées sous forme annulaire, étant entendu qu'elles présentent une ouverture centrale en forme d'étoile qui est limitée par plusieurs pattes élastiques faisant saillie radialement vers l'intérieur et dont les extrémités libres se trouvent sur un cercle intérieur de la rondelle (23) dont le diamètre est inférieur à un diamètre extérieur des tiges de fixation (21).
